# EUROPEAN PATENT APPLICATION

(11) **EP 3 264 708 A1**
(43) Date of publication of application: **03.01.2018**
(21) Application number: 16001442.9
(22) Date of filing: 28.06.2016
(51) Int. Cl.: H04L 29/06, H04W 12/08, H04W 88/02

(54) **METHOD FOR PROCESSING A MESSAGE CONTAINING ADVERTISEMENTS**

(71) Applicant: Giesecke+Devrient Mobile Security GmbH, 81677 München (DE)
(72) Inventor: Tea, Vui Huang, SE-12061 Stockholm (SE)

(57) **Abstract**

The invention relates to a method for processing a message containing advertisements and being transmitted from a server (21) to a mobile device (10) over a mobile network (30). The mobile device (10) has an application toolkit (11) installed thereon enabling a secure element (13) of the mobile device (10) to initiate actions of the mobile device (10). The message between the server (21) and the mobile device (10) has a predetermined data format with a predetermined address value which is to be processed in the secure element (13). The method comprises the steps of receiving a message from the server (21); determining an address value of the message and discarding the message, if the determined address value of the message corresponds to an address value of a list of predetermined address values or has an assigned first attribute in the list of predetermined address values, and passing the message to the secure element (13) for further processing, if the determined address value of the message is not an address value of the list of predetermined address values or has an assigned second attribute in the list of predetermined address values.

## Description

The invention relates to a method for processing a message containing advertisements and being transmitted from a server to a mobile device over a mobile network. The invention further relates to a mobile device.

Managing advertisements on mobile devices is a challenging demand. So far there is a poor user experience and a low effectiveness. Considering, that the amount of content retrieved from the internet by users is requested from their mobile devices instead of stationary computers, an effective way for handling and presenting advertisements on mobile devices would be helpful. On the other hand, users of mobile devices are often bothered by advertisements. Hence, mobile advertising blocking has become more popular. There are already multiple advertisement blocking applications (short: ad blockers) available on mobile devices. However, these ad blockers only work on mobile device web browsers and mobile phone applications. In particular, they are not able to block SIM card advertisements.

It is an object of the present invention to provide a method and a mobile device which allow a better control of handling advertisements on mobile devices.

This object is solved by a method according to claim 1 and a device according to claim 12. Preferred embodiments are set out in the dependent claims.

According to a first aspect of the present invention, a method for processing a message containing advertisements and being transmitted from a server to a mobile device over a mobile network is provided. The mobile device has an application toolkit installed thereon enabling a secure element of the mobile device to initiate actions of the mobile device. The message between the server and the mobile device has a predetermined data format with a predetermined address value which is to be processed in the secure element. The method comprises the steps of receiving a message from the server; determining an address value of the message; discarding the message, if the determined address value of the message corresponds to an address value of a list of predetermined address values or has an assigned first attribute in the list of predetermined address values, and passing the message to the secure element for further processing, if the determined address value of the message is not an address value of the list of predetermined address values or has an assigned second attribute in the list of predetermined address values.

According to a second aspect, the invention provides a mobile device having an application toolkit installed thereon enabling a secure element on the mobile device to initiate actions of the mobile device. The mobile device is adapted to receive a message having a predetermined data format with a predetermined address value from a server; determine an address value of the message; and discard the message, if the determined address value of the message corresponds to an address value of a list of predetermined address values or has an assigned first attribute in the list of predetermined address values, and pass the message to a secure element for further processing, if the determined address value of the message is not an address value of the list of predetermined address values or has an assigned second attribute in the list of predetermined address values.

According to the invention, it is possible to block advertisements which are transmitted to the secure element, e.g. a Subscriber Identity Module (SIM). The filtering by means of predetermined address values enables the option to block or pass SIM card advertisements. If a message having a specific address value which is on a list of predetermined address values or has an assigned first attribute in the list of predetermined address values that indicate the message comprises advertisements, the message is discarded, i.e. destroyed or aborted before it can reach the secure element for further processing to execute the advertisement. A user of the mobile device does not get annoyed by secure element (SIM card) advertisements, since he is enabled to get control about which advertisements shall be blocked or not.

According to a preferred embodiment of the invention, the address determination of the address value of the message is determined by a blocking application running on the mobile device. The blocking application, running on the mobile device, is executed with a higher priority than an application toolkit (e.g. SIM Toolkit Application) to ensure that the process of filtering (i.e. determining the address value of the message and comparing it with address values on the list of the predetermined address values) can be executed prior to any further execution, in particular the processing of the message in the secure element.

According to a further preferred embodiment, the blocking application may be executed within the application toolkit itself.

The blocking application may receive the message from the server. The server may be a mobile advertising server which is adapted to provide advertisements. As already denoted, the message is received by the blocking application before any processing can be made by the application toolkit. The message which is transmitted from the server to the mobile device is a short message, in particular a 8-bit data short message. A short message is also known under the acronym "SMS". A data format which may be used by the secure element is, for example, Toolkit Application Reference (TAR). Alternatively, the data format SMS-ME, SMS-SIM etc. could be used. SMS-ME is a SMS that is to be sent to the mobile phone, SMS-SIM is SMS that is to be sent to the SIM card. SMS-SIM can be used to deliver advertisements to the SIM card. Both are part of SMS-PP, which stands for Short Message Service Point to Point (SMS-PP). Similarly, Short Message Service Cell Broadcast (SMS-CB) can also be used to deliver advertisements to the SIM card.

These proactive commands (please refer to GSM 11.14 version 5.4.0: July 1997) can also/alternatively be used to deliver advertisements to the SIM card:

| **Command description** | **Source** | **Destination** |
|---|---|---|
| Menu selection | Keypad | SIM |
| Call control | ME | SIM |
| Command result | ME | SIM |
| Profile download | ME | SIM |
| Cell broadcast download | Network | SIM |
| SMS-PP download | Network | SIM |

The list of predetermined address values may be stored on the mobile device to enable an instant filtering on receiving the message. The list of predetermined address value may be preset, in particular by an advertisement blocking server. Presetting the list of predetermined address values may be made while the application toolkit is stored on the mobile device, e.g. as a step of manufacturing of the mobile device. However, the list of predetermined address values may be updated over the air with new and/or amended address values, in particular, by an advertisement blocking server. As an advantage, messages from a mobile advertising server containing new address values indicating that an advertising action is to be initiated on the mobile device can be identified by the advertisement blocking server and put on the list of predetermined address values for filtering purposes in the future.

According to a further embodiment, the application toolkit, in addition, performs a pattern recognition for an identification and discarding of an advertising application to be installed on the mobile device. This embodiment refers to the situation where an advertisement is installed together with a mobile advertising applet when it is installed. Since the filtering method described above will not be able to block these applets, the application toolkit in addition can use pattern recognition. As a result, the application toolkit is able to discard any request to perform any advertising action immediately after a toolkit event has been sent to the secure element. As the secure element can be updated over the air with other types of mobile advertising applets, the blocking application can receive an automatic update of black-listed patterns from an online ad-blocking cloud service, e.g. from the advertisement blocking server.

The invention will be explained more detailed by reference to the accompanying figures.
- Fig. 1: shows a first embodiment of a mobile device according to the invention illustrating the method for processing a message containing advertisements.
- Fig. 2: shows a second embodiment of a mobile device according to the invention illustrating the method for processing a message containing advertisements.

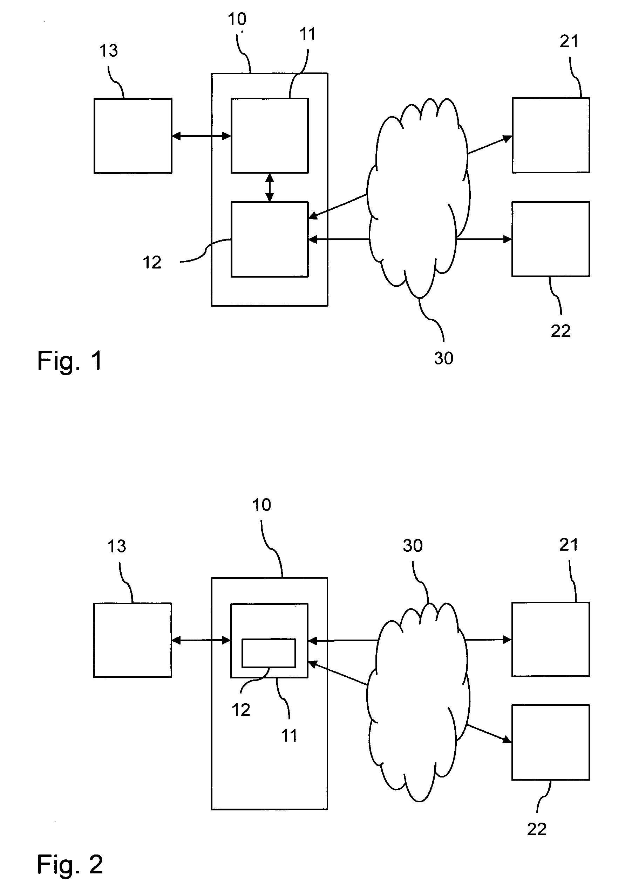

Fig.1 shows a schematic view of a first embodiment of a mobile device 10 according to the invention which is adapted to process a message containing advertisements. The mobile device 10, e.g. a mobile phone, a tablet PC etc., comprises an application toolkit 11, and a blocking application 12. The application toolkit 11, e.g. SIM application toolkit, specified in TS51.014, enables a secure element 13 of the mobile device 10 to take on an active role for controlling the mobile device. With the application toolkit 11, for example, it is possible to display information on a display (not shown) of the mobile device 10. Furthermore, inputs may be requested and messages may be sent or received via a wireless interface (not shown). The application toolkit 11 is the basis for most additional application of mobile devices.

A message containing an advertisement (not shown in Fig. 1) is transmitted from a so-called mobile advertising server 21 to the mobile device 10. The message is received from the mobile device 10 via a mobile network 30 for example a GSM- or UMTS-communication network, or it is tunneled one way or another via wireless network using different technologies, such as SIP (session initiation protocol). The message created and sent by the mobile advertising server 21 may be a 8-bit data short message (SM) whose recipient is the secure element 13 containing mobile advertising applications. The secure element 13 uses an addressing system known as "TAR" (SIM Toolkit Application Reference) to deliver the advertisement as well as communicate with the corresponding mobile advertising applets which are not shown in Fig. 1. According to the invention, the 8-bit data SM is filtered by the aforementioned TAR value, thus enabling the blocking communication and delivery of unwanted advertisements to the mobile advertising applications on the secure element 13 while allowing desired applications installed on the secure element 13 to function as normal.

This mechanism may be realized as can be seen from Fig. 1. The message sent from the mobile advertising server 21 is received by the blocking application 12. The blocking application 12 determines the address value of the 8-bit data SM. The message, i.e. the advertisement, is discarded (destroyed or aborted) if the determined address value of the 8-bit data SM corresponds to an address value of a list of predetermined address values or has an assigned first attribute in the list of predetermined address values. The 8-bit data SM is passed to the secure element for further processing, if the determined address value of the 8-bit data SM is not an address value of the list of predetermined address values or has an assigned second attribute in the list of predetermined address values.

Table 1 shows an example of such a list of predetermined address values. In the first column the name of the applet is outlined ("SIM card applets"). The second column indicates the address ("TAR value") and the third column ("Comments") indicates whether the message should be discarded ("Unwanted") or not ("Wanted").

**Table 1: List of predetermined address values**

| | **SIM card applet** | **TAR value** | **Comments** |
|---|---|---|---|
| 1. | GSMA Mobile Connect | C0 02 1A | Wanted |
| 2. | Vendor #1 Advertisement Application | C1 03 1A | Wanted |
| 3. | Vendor #1 Advertisement Configuration | C1 03 1B | Wanted |
| 4. | Vendor #2 Advertisement Installer | 01 02 03 | Unwanted |
| 5. | Vendor #2 Advertisement Installer Assistant | 01 02 04 | Unwanted |

In the mobile device 10 according to Fig. 1, the filtering will be accomplished by the blocking application 12 that listens to the 8-bit data SM, i.e. the messages, filtering the TAR value and discarding it instead of delivering it to the secure element 13. The blocking application 12 that listens for SMS broadcasts by the operating system of the mobile device has a higher priority than the application toolkit 11 (sometimes referred to SIM Toolkit, STK) so that it can receive the SMS broadcast before the application toolkit 11. If the SMS broadcast contains a TAR in the blacklist of TAR values or an attribute indicating the message as unwished advertisement ("Unwanted"), then the SMS broadcast is destroyed or aborted before it reaches the application toolkit 11. This way, the application toolkit 11 is not able to deliver the advertisement to the mobile advertising SIM application on the secure element 13.

In the embodiment illustrated in Fig. 2, the blocking application 12 is part of the application toolkit 11. Hence, the filtering as outlined above is made by the application toolkit 11 itself.

As the secure element 13 can be updated over the air (OTA) with other types with mobile advertising applets, the blocking application 12 can receive an automatic update of black-listed TAR values from the advertisement blocking server 22 via the mobile network 30. The advertisement blocking server 22 may be part of a cloud service.

In a further embodiment, pattern recognition can be made to block applets (i.e. applications) containing advertisements. The advertising is installed together with the mobile advertising applet when it is installed. The above described TAR filtering method will not be able to block these applets. To block them, the application toolkit 11 can use pattern recognition. As an example, after a user hangs up a call, a "Call Disconnect" STK event is sent to the mobile advertising applet if it requests for it. The mobile advertising applet can then issue a STK command "Display Text" to pop-up advertisements on the mobile device. The application toolkit 11 can pick up this pattern and discard any request to perform a "Display Text" immediately after a "Call Disconnect" STK event has been sent to the secure element 13.

As the secure element 13 can be updated over the air with other types of mobile advertising applets, the blocking application 12 can receive an automatic update of black-listed patterns from the advertisement blocking server 22.

### List of reference signs

- 10: mobile device
- 11: application toolkit (SIM Application Toolkit, USIM Application Toolkit)
- 12: blocking application
- 13: secure element (SIM card)
- 21: mobile advertising server
- 22: advertisement blocking server
- 30: mobile network

## Claims

1. A method for processing a message comprising advertisements and being transmitted from a server (21) to a mobile device (10) over a mobile network (30), wherein the mobile device (10) has an application toolkit (11) installed thereon enabling a secure element (13) of the mobile device (10) to initiate actions of the mobile device (10), and wherein the message between the server (21) and the mobile device (10) has a predetermined data format with a predetermined address value which is to be processed in the secure element (13); comprising the steps of:
- receiving a message from the server (21);
- determining an address value of the message;
- discarding the message, if the determined address value of the message corresponds to an address value of a list of predetermined address values or has an assigned first attribute in the list of predetermined address values, and passing the message to the secure element (13) for further processing, if the determined address value of the message is not an address value of the list of predetermined address values or has an assigned second attribute in the list of predetermined address values.

2. The method according to claim 1, wherein the address determination of the address value of the message is determined by a blocking application (12) running on the mobile device (10).

3. The method according to claim 2, wherein, on the mobile device, the blocking application (12) is executed with a higher priority than the application toolkit (11).

4. The method according to claim 2 or 3, wherein the blocking application (12) is executed within the application toolkit (11).

5. The method according to one of the preceding claims, wherein the blocking application (11) receives the message from the server (21).

6. The method according to one of the preceding claims, wherein the message is a short message, in particular a 8-bit data short message.

7. The method according to one of the preceding claims, wherein the data format is Toolkit Application Reference (TAR)

8. The method according to one of the preceding claims, wherein the list of predetermined address values is stored on the mobile device (10).

9. The method according to one of the preceding claims 1 to 8, wherein the list of predetermined address values is preset, in particular by an advertisement blocking server (22).

10. The method according to one of the preceding claims 1 to 8, wherein the list of predetermined address values is updated over the air with new and/ or amended address values, in particular by an advertisement blocking server (22).

11. The method according to one of the preceding claims, wherein the application toolkit (11), in addition, performs a pattern recognition for an identification and discarding of an advertising application to be installed on the mobile device (10).

12. Mobile device (10) having an application toolkit (11) installed thereon enabling a secure element (13) of the mobile device (10) to initiate actions of the mobile device (10), the mobile device (10) being adapted to:
- receive a message having a predetermined data format with a predetermined address value from a server (21);
- determine an address value of the message;
- discard the message, if the determined address value of the message corresponds to an address value of a list of predetermined address values or has an assigned first attribute in the list of predetermined address values, and pass the message to the secure element (13) for further processing, if the determined address value of the message is not an address value of the list of predetermined address values or has an assigned second attribute in the list of predetermined address values.
